# EUROPÄISCHE PATENTSCHRIFT

(11) **EP 2 424 715 B1**
(45) Veröffentlichungstag und Bekanntmachung des Hinweises auf die Patenterteilung: **13.03.2013**
(21) Anmeldenummer: 10720878.7
(22) Anmeldetag: 26.04.2010
(51) Int. Cl.: B27C 9/04, B27G 1/00, B27M 1/08, B23Q 1/62, B23Q 1/01

(54) **VORRICHTUNG ZUM ERKENNEN UND KORRIGIEREN VON FEHLSTELLEN IN HOLZ**
APPARATUS FOR DETECTING AND CORRECTING FLAWS IN WOOD
DISPOSITIF POUR DÉTECTER ET CORRIGER DES POINTS DÉFECTUEUX DANS LE BOIS

(30) Priorität: 30.04.2009 AT 6722009
(43) Veröffentlichungstag der Anmeldung: 07.03.2012
(60) Teilanmeldung: 12179386.3
(73) Patentinhaber: Fill Gesellschaft m.b.H., 4942 Gurten (AT)
(72) Erfinder: FILL, Andreas, A-4942 Gurten (AT)
(74) Vertreter: Burger, Hannes
(86) Internationale Anmeldenummer: PCT/AT2010/000127
(87) Internationale Veröffentlichungsnummer: WO 2010/124307

(56) Entgegenhaltungen:
- EP-A2- 0 239 143
- EP-A2- 1 837 189
- AT-U2- 11 042
- DE-A1- 10 223 831
- DE-U1-202008 008 428
- US-A- 4 614 555
- US-A1- 2007 209 734

## Beschreibung

### Technisches Gebiet

Die Erfindung betrifft eine Vorrichtung zum Erkennen und Korrigieren von Fehlstellen in Holz mit einem Fehlstellen erkennenden und -messenden Sensor, mit einer Fördereinrichtung für das zu prüfende Holz und mit etwaige Fehlstellen ausbessernden Werkzeugen, die rechnergesteuert entlang wenigstens zweier, vorzugsweise dreier, Achsen bezüglich der Fördereroberfläche mit Vorschüben verlagerbar sind, wobei die Werkzeuge auf einem die Fördereinrichtung quer zur Förderrichtung überspannenden Portal quer zur Förderrichtung verlagerbar angeordnet sind.

### Stand der Technik

Eine gattungsgemäße Vorrichtung ist beispielsweise aus der EP 239 143 A2 bekannt, welche die zu reparierenden Fehlstellen mit einem Sensor erkennt, der üblicherweise aus einer Mehr- bzw. Vielzahl an zum Sensor verschalteten Sensoreinheiten besteht. Damit lässt sich die Lage der Fehlstellen am Holz, insbesondere an Holzplatten oder Latten bzw. Trägern eindeutig feststellen. Im Anschluss daran wird das Produkt in festgelegten Taktschüben und Abständen einer oder mehreren Arbeitsstationen zugeleitet, in denen die erforderlichen Ausbesserungsarbeiten durchgeführt werden. Dazu wird ein auszubesserndes Holz mit der Fördereinrichtung zu einem Ausbesserungswerkzeug verlagert, dort angehalten und anschließend die Fehlstelle mit dem Ausbesserungswerkzeug versorgt, wonach das entsprechende Holz gegebenenfalls bis zur nächsten Fehlstelle oder Arbeitsstation weitergefördert wird. Zu diesem Zweck können entlang des Förderbandes mehrere derartiger Werkzeuge vorgesehen sein, denen je ein gesonderter Antrieb zugeordnet ist.

Eine andere Vorrichtung zum Ausbessern von Fehlstellen in Holz (DE 102 23 831 A1) umfasst auf einem Portal angeordnete Werkzeuge, die quer zur Förderrichtung des Holzes velagerbar angeordnet sind. Diese Vorrichtung benötigt allerdings eine nicht unerhebliche Anzahl an Portalen, was die Baulänge der Vorrichtung in unerwünschtem Masse erhöht. Ein Brett an einer bestimmten Stelle zu bearbeiten während es einem kontinuierlichen Vorschub unterliegt ist beispielsweise aus der EP 2 006 060 A1 bekannt.

Zudem können Fehlstellen auch manuell erkannt und repariert werden, was sich für eine Großserienfertigung allerdings nicht rechnet. Ein wesentlicher Nachteil dieser bekannten Vorrichtung liegt darin, dass das Holz zum Bearbeiten stets angehalten werden muss und entsprechend lange Fördereinrichtungen vorzusehen sind, wenn mehrere Bearbeitungseinrichtungen in Vorschubrichtung hintereinander angeordnet sind.

### Darstellung der Erfindung

Ausgehend von einem Stand der Technik der vorgeschilderten Art liegt der Erfindung die Aufgabe zugrunde, eine Vorrichtung zum Erkennen und Korrigieren von Fehlstellen in Holz zu schaffen, die bei gegenüber dem Stand der Technik verkürzter Baulänge einen erhöhten Durchsatz an zu erkennenden und korrigierenden Fehlstellen ermöglicht.

Die Erfindung löst diese Aufgabe dadurch, dass dem Portal wenigstens ein am Portal quer zur Förderrichtung verlagerbarer Führungsträger zugeordnet ist, entlang dessen in Förderrichtung ausgerichteter Führung ein Werkzeugschlitten verlagerbar ist.0

Gemäß der Erfindung ist das die Fördereinrichtung überspannende Portal vorzugsweise ortsfest gegenüber der Fördereinrichtung angeordnet und erfolgt eine Bewegung des Werkzeuges quer zur Vorschubrichtung durch ein Verfahren des wenigstens einen am Portal quer zur Fördereinrichtung verlagerbaren Führungsträgers, wohingegen eine Verlagerung des Werkzeugschlittens in Vorschubrichtung entlang des quer vom Portal abragenden und entlang des Portals verlagerbaren Führungsträgers mit einem gesonderten Vorschub erfolgt. Der Werkzeugschlitten nimmt vorzugsweise eine Dosiereinheit, Mischeinheit bzw. Ausbesserungseinheit auf, welche eine etwaige Fehlstellen mit einer aushärtenden Füllmasse, beispielsweise einem Harz od. dgl., ausfüllt, oder aber er trägt eine mechanische Bearbeitungseinheit, Dübelsetzeinheit, Flickensetzeinheit od. dgl.. Ein wesentlicher Vorteil der Erfindung liegt darin, dass die Fördereinrichtung zum Ausbessern der jeweiligen Fehlstelle nicht mehr angehalten werden muss, wodurch sich der Durchsatz der Vorrichtung erheblich erhöht. Es kann lediglich erforderlich sein, die Vorschubgeschwindigkeit an eine Fehlstellenanordnung, -größe und/oder -anzahl anzupassen.

Sind zudem wenigstens zwei Führungsträger je Portal vorgesehen, so können problemlos zwei, oder auch beim Vorsehen mehrerer Führungsträger mehrere Fehlstellen, die insbesondere an einem Holzstück oder an mehreren nebeneinandergereihten, gegebenenfalls in Förderrichtung zueinander versetzt angeordneten, Holzstücken auftreten, ohne ein Anhalten der Fördereinrichtung versorgt werden.

Eine weitere diesbezügliche Verbesserung ergibt sich, wenn dem Portal zwei Querführungen für Führungsträger zugeordnet sind, wobei eine Querführung wenigstens einen gegen die Förderrichtung und die andere Querführung wenigstens einen in die Förderrichtung vom Portal abragenden Führungsträger umfasst. Damit können in Förderrichtung beispielsweise zwei Gruppen an Werkzeugen vorgesehen werden, die für sich entlang der Querführung verlagerbar sind. Mit einer auf diese Art und Weise möglichen Erhöhung der Anzahl an Werkzeugen können beispielsweise unterschiedliche Arten und Farben an Ausbesserungsmaterialien mit einer Vorrichtung gleichermaßen angewendet werden. Dies insbesondere dann, wenn je Querführung wenigstens zwei vorzugsweise mehrere Führungsträger vorgesehen sind. Dadurch können beispielsweise dunkle und helle Fehlstellen im Holz gleichermaßen in vorteilhafter Weise mit entsprechenden Ausbesserungsmitteln behandelt werden.

Der Erfindung liegt der wesentliche Vorteil zugrunde, dass eine derartige Vorrichtung gegenüber dem Stand der Technik weniger Bauraum benötigt, insbesondere eine wesentliche kürzere Baulänge aufweist, da die Bearbeitungseinheiten sowohl in Serie als auch parallel zueinander an einem Portal angeordnet sind und gegebenenfalls sogar alle Werkzeuge gleichzeitig an einem Werkstück arbeiten können. Ein Werkzeug umfasst beispielsweise eine mechanische Bearbeitungseinheit, Dübelsetzeinheit, Flicksetzeinheit od. dgl. bzw. eine Dosiereinheit, Mischeinheit oder Ausbesserungseinheit für eine aushärtende Masse.

Das Ausbessern der Fehlstellen erfolgt im Durchlauf, also insbesondere ohne Anhalten der Fördereinrichtung, wobei die Bearbeitungseinheiten mit mindestens zwei Freiheitsgraden, in und quer zur Fördereinrichtung ausgestattet sind. Dass das Werkzeug zudem senkrecht gegen die Fördereroberfläche anstellbar sein kann, versteht sich von selbst.

Ein Verfahren zum Betreiben einer erfindungsgemäßen Vorrichtung-, bei dem die Fehlstellen von auf einem Längsförderer aufliegenden Hölzern zuerst von einem Sensor erkannt, vermessen und die Daten zwischengespeichert werden, wonach die Fehlstellen mit einem in Förderrichtung dem Sensor nachgeordneten Werkzeug ausgebessert werden zeichnet sich dadurch aus, dass die Messdaten der vom Sensor aufgenommene Fehlstellen mit im Speicher abgelegten Messdaten, insbesondere Referenzdaten, abgeglichen werden und aus dem Abgleich die zum Ausbessern erforderliche Materialmenge errechnet und den aufgenommenen Messdaten zugeordnet wird und dass das Ausbessern der Fehlstellen bei laufender Fördereinrichtung erfolgt und das Werkzeug zum Ausbessern einer jeweiligen Fehlstelle gegenüber der bewegten Fehlstelle verlagert wird.

Um dabei den Einsatz an Ausbesserungsmaterialien möglichst gering zu halten, werden die Messdaten der vom Sensor aufgenommenen Fehlstellen mit im Speicher abgelegten Messdaten, insbesondere Referenzdaten, abgeglichen und wird aus dem Abgleich die zum Ausbessern der jeweiligen Fehlstelle erforderliche Mindestmaterialmenge errechnet und den aufgenommenen Messdaten zugeordnet. Dieses System ist insbesondere selbstlernend auszuführen, wodurch, beispielsweise nach einem zusätzlichen Vermessen der Fehlstelle nach einem Bearbeiten und einem Vergleich der vor und nach der Ausbesserung aufgenommenen Daten, etwaige Korrekturen in den Referenzdaten automatisch oder manuell vorgenommen werden können bzw. neue Referenzdaten hinzugefügt werden.

Durch diese Maßnahme lässt sich die Bearbeitungsgeschwindigkeit erheblich verbessern. Zudem kann dabei die Fördergeschwindigkeit der Fördereinrichtung in Abhängigkeit der Anzahl der auszubessernden Fehlstellen und der Anzahl der vorhandenen Werkzeuge im Sinne einer Erzielung einer maximalen Förderleistung eingestellt werden.

Da eine möglichst hohe Produktionsgeschwindigkeit erreicht werden soll, empfiehlt es sich, wenn für die aufgenommenen Messdaten in Abhängigkeit der jeweiligen Lage und der errechneten zum Ausbessern der jeweiligen Fehlstelle erforderlichen Materialmenge und der dafür erforderlichen Ausbesserungszeit jene Kombination an Bearbeitungsfolge gewählt wird, mit der eine maximale Fördereinrichtungsvorschubgeschwindigkeit erzielt wird. Der Rechner variiert dabei insbesondere alle möglichen Bearbeitungsreihenfolgen der vom Sensor aufgenommenen und vermessenen Fehlstellen und wählt jene aus, mit der die größte Vorschubsgeschwindigkeit erzielt werden kann, welche dann von einer entsprechenden Steuerung vorgegeben wird. Dazu ist es erforderlich, dass die Recheneinheit nicht nur sämtliche Daten bzw. Lagen von Fehlstellen, sondern auch der Werkzeuge kennt.

Vorteilhafte Verhältnisse ergeben sich, wenn der Sensor die Farbe des die Fehlstelle umgebenden Materials erkennt, der Rechner die Farbe eines verfügbaren Füllmaterials bestimmt und im Speicher der Fehlstelle zuordnet, wonach der Fehlstelle zum Ausbessern ein Werkzeug mit einer geeigneten Ausbesserungsmaterialfarbe zugewiesen und bei der Berechnung der Vorschubsgeschwindigkeit berücksichtigt wird.

Wesentlich für die Erfindung ist, dass die Hölzer in Bewegung bearbeitet werden und die Vorschubgeschwindigkeit während dieser Bearbeitung derart variabel eingestellt bzw. gewählt wird, dass ein möglichst großer Durchsatz erzielt wird. Dazu wertet eine Rechnereinheit die Sensordaten und die Daten aus der Fehlererkennung sowie gegebenenfalls zusätzliche Daten eines Bedieners mit Algorithmen derart aus, dass eben diese maximale Förderleistung erreicht wird. Mit der Erfindung ist es möglich eine Vielfalt an Produkten und Produktvarianten gleichermaßen in einer Vorrichtung zu bearbeiten, ohne erhebliche Umrüstzeiten der Vorrichtung in Kauf nehmen zu müssen. Mit der Erfindung wird zudem die Prozesssicherheit erhöht, wobei durch entsprechende Algorithmen die optimale Dosiermenge, die optimale Arbeitsgeschwindigkeit der Bearbeitungseinheiten sowie die Bearbeitungsreihenfolge und die Aufteilung der nötigen Arbeiten auf die einzelnen Bearbeitungseinheiten so errechnet wird, dass die Vorschubgeschwindigkeit des zu bearbeitenden Produkts maximal wird.

### Kurze Beschreibung der Zeichnung

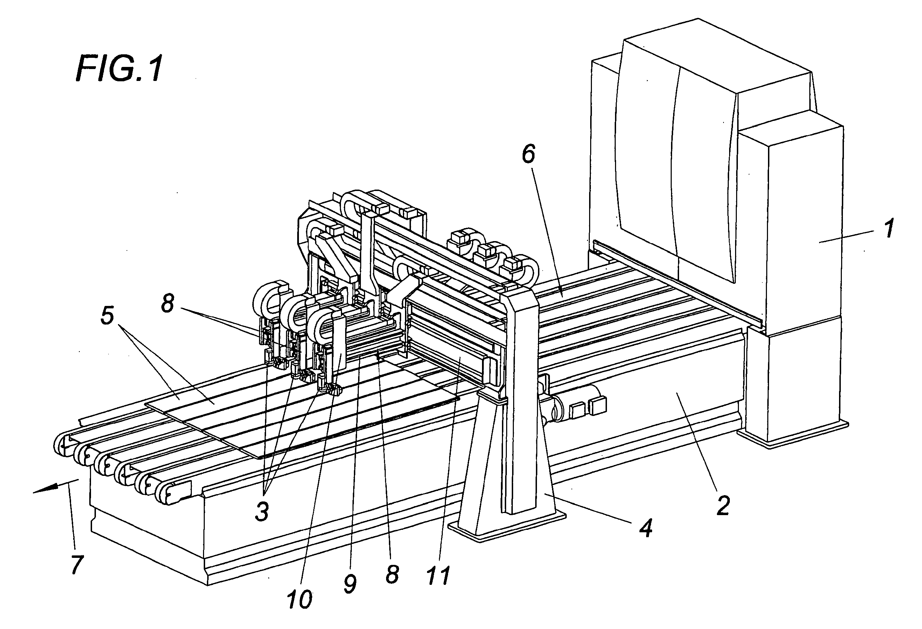

In der Zeichnung ist die Erfindung anhand eines Ausführungsbeispieles schematisch dargestellt. Es zeigen
Fig. 1 eine erfindungsgemäße Vorrichtung in Schrägansicht,

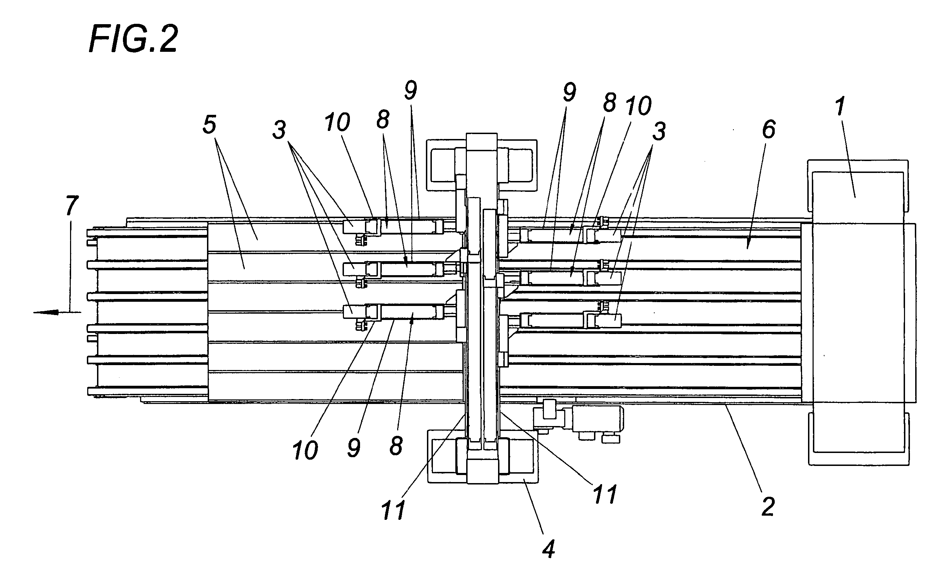

Fig. 2 die Vorrichtung aus Fig. 1 in Draufsicht,

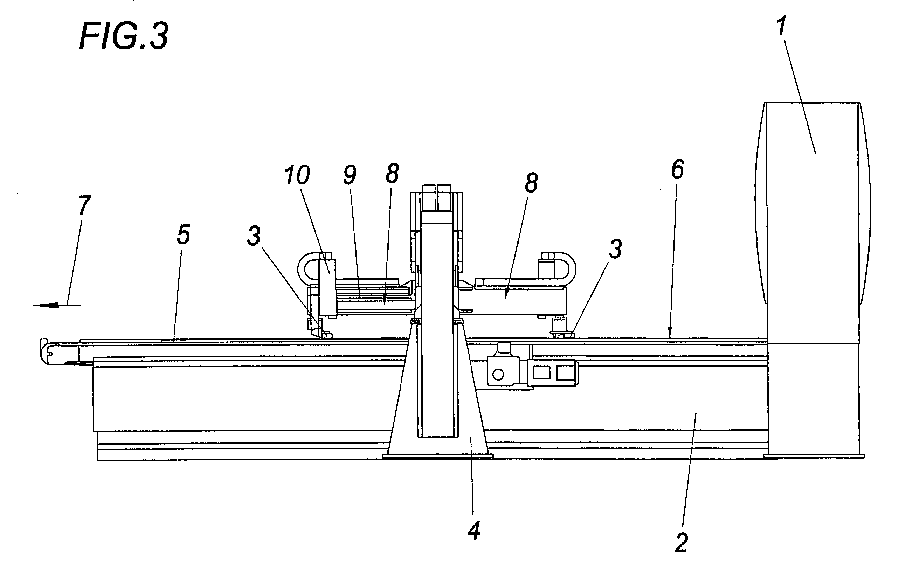

Fig. 3 die Vorrichtung aus Fig. 1 und 2 in Seitenansicht,

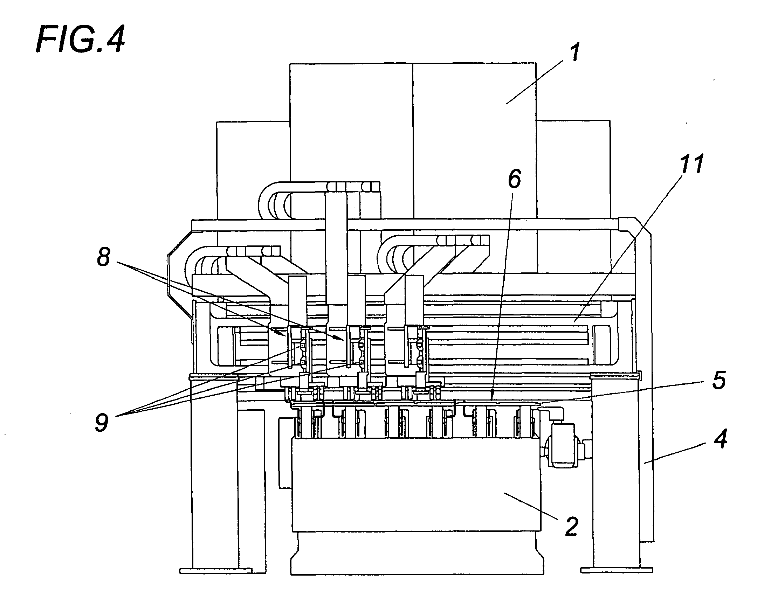

Fig. 4 die Vorrichtung aus Fig. 1 bis 3 in Vorderansicht und

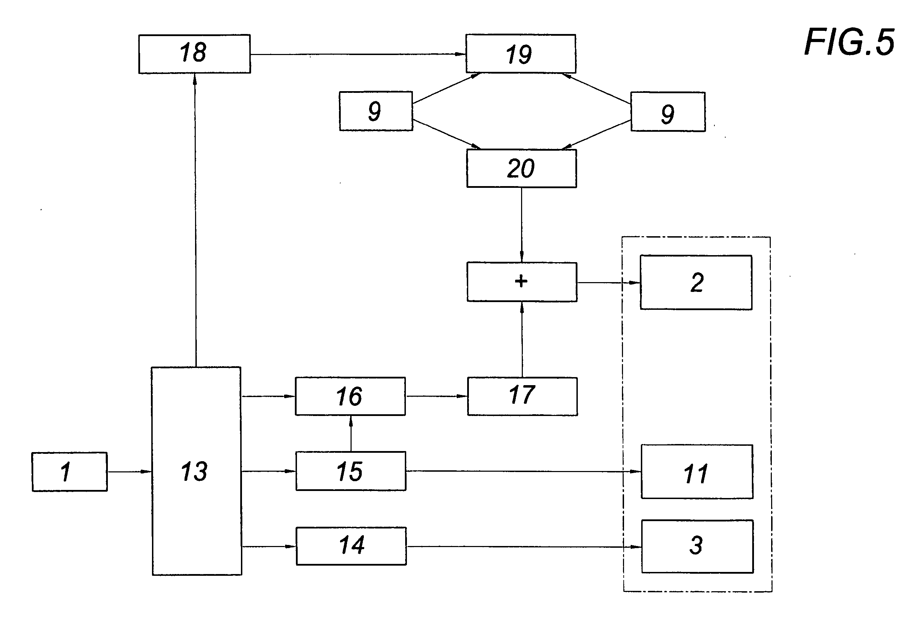

Fig. 5 ein Funktionsschema einer erfindungsgemäßen Anlage.

### Weg zur Ausführung der Erfindung

Eine Vorrichtung zum Erkennen und Korrigieren von Fehlstellen in Holz umfasst einen Fehlstellen erkennenden und messenden Sensor 1 der einem Förderband 2 ebenso zugeordnet ist, wie ein mehrere Ausbesserungswerkzeuge 3 tragendes Portal 4, welches das Förderband 2 überspannt. Das zu prüfende Holz, im dargestellten Ausführungsbeispiel Holzlatten 5, liegen auf der Fördereroberfläche 6 auf und werden mit dem Förderband 2 zuerst durch den Scanner 1 verlagert und an schließend den Bearbeitungswerkzeugen 3 zugeführt. Die einzelnen Bearbeitungswerkzeuge 3 sind rechnergesteuert entlang wenigstens zweier, vorzugsweise dreier, Achsen bezüglich der Förderoberfläche 6 mit Vorschüben verlagerbar.

Um einerseits mehrere Fehlstellen gleichzeitig ausbessern zu können ohne anderseits das Förderband 2 zum Ausbessern der Fehlstellen 2 anhalten zu müssen, sind die Werkzeuge 3 auf einem die Fördereinrichtung 2 quer zur Förderrichtung 7 überspannendes Portal 4 angeordnet, wobei dem Portal 4 mehrere quer zur Förderrichtung 7 verlagerbare Führungsträger 8 zugeordnet sind, entlang deren in Förderrichtung 7 ausgerichteten Führungen 9 je ein Werkzeugschlitten 10 verlagerbar ist. Damit ist gewährleistet, dass das Holz 5 während es unter Vorschub unter dem Portal 4 durchgeführt wird mit den Ausbesserungswerkzeugen 3 bearbeitet werden kann, wobei das Werkzeug 3 entlang der Führungen 9 und der Portalführung 11 einer Fehlstelle folgend verlagerbar ist. Des Weiteren sind am Portal 4 zwei Querführungen 11 für Führungsträger 8 vorgesehen, wobei eine Querführung 11 drei gegen die Förderrichtung 7 und die andere Querführung 11 drei in die Förderrichtung 7 vom Portal 4 abragende Führungsträger 8 umfasst.

Zum Ausbessern etwaiger Fehlstellen werden die Hölzer 5 durch den Sensor 1 verlagert, diese erkennt Fehlstellen und speichert die entsprechenden Fehlstellendaten und Fehlstellenlagen in einen Datenspeicher ab, wonach die Fehlstellen mit einem in Förderrichtung dem Sensor nachgeordneten Werkzeug 3 bei laufender Fördereinrichtung 2 ausgebessert werden. Dazu wird das Werkzeug 3 mit dem Vorschub gegenüber der jeweiligen Fehlstelle verlagert.

Der Sensor 1 schreibt seine Daten in den Speicher einer Recheneinheit 13, welche aus den aufgenommenen Messdaten der Fehlerstellen und deren jeweiliger Lage zusammen mit den errechneten, zum Ausbessern der jeweiligen Fehlstellen erforderlichen Materialmengen und den dafür erforderlichen Ausbesserungszeiten eine Kombination einer Bearbeitungsfolge auswählt, mit der eine maximale Fördereinrichtungsvorschubgeschwindigkeit erzielt wird. Der Rechner 13 steuert über eine Steuereinheit 14 beispielsweise den Auftragskopf einer Ausbesserungsmaterialdosiereinrichtung, also des Werkzeugs 3 an. Des Weiteren ergibt eine Steuerung 15 die Vorschubgeschwindigkeit 11 für die Quervorschübe der Führungsträger 8 vor. In einem Modul 16 erfolgt die Ermittlung der jeweiligen schnellsten Bearbeitungsreihenfolge für die Fehlstellen, die zusammen mit den Ansteuerungsdaten für Vorschübe und Förderergeschwindigkeit in den Speicher 17 einer virtuellen Vorschubsachse abgelegt wird. Gleichermaßen ist eine Steuerung 18 vorgesehen, welche den Vorschub 19 der den einzelnen Führungen 9 zugeordneten Werkzeugschlitten 10 ansteuert. Diese Daten werden auf den Vorschub des Förderbandes 2 aufsynchronisiert 20 und abschließend mit den Daten 17 abgeglichen und die Fördereinrichtung 2 entsprechend angesteuert.

## Patentansprüche

1. Vorrichtung zum Erkennen und Korrigieren von Fehlstellen in Holz mit einem Fehlstellen erkennenden und -messenden Sensor (1), mit einer Fördereinrichtung (2) für das zu prüfende Holz (5) und mit etwaige Fehlstellen ausbessernden Werkzeugen (3), die rechnergesteuert entlang wenigstens zweier, vorzugsweise dreier, Achsen bezüglich der Fördereroberfläche (6) mit Vorschüben verlagerbar sind, wobei die Werkzeuge auf einem die Fördereinrichtung quer zur Förderrichtung überspannenden Portal quer zur Förderrichtung verlagerbar angeordnet sind, **dadurch gekennzeichnet, dass** dem Portal (4) wenigstens ein am Portal (4) quer zur Förderrichtung (7) verlagerbarer Führungsträger (8) zugeordnet ist, entlang dessen in Förderrichtung (7) ausgerichteter Führung (9) ein Werkzeugschlitten (10) verlagerbar ist.

2. Vorrichtung nach Anspruch 1, **dadurch gekennzeichnet, dass** wenigstens zwei Führungsträger (8) je Portal (4) vorgesehen sind.

3. Vorrichtung nach Anspruch 2, **dadurch gekennzeichnet, dass** dem Portal (4) zwei Querführungen (11) für Führungsträger (8) zugeordnet sind, wobei eine Querführung (11) wenigstens einen gegen die Förderrichtung (7) und die andere Querführung (11) wenigstens einen in die Förderrichtung (7) vom Portal (4) abragenden Führungsträger (8) umfasst.

4. Vorrichtung nach einem der Ansprüche 1 bis 3, **dadurch gekennzeichnet, dass** je Querführung wenigstens zwei, vorzugsweise mehrere Führungsträger vorgesehen sind.

5. Verfahren zum Betreiben einer Vorrichtung nach einem der Ansprüche 1 bis 4, bei dem die Fehlstellen von auf einem Längsförderer aufliegenden Hölzern zuerst von einem Sensor erkannt, vermessen und die Daten zwischengespeichert werden, wonach die Fehlstellen mit einem in Förderrichtung dem Sensor nachgeordneten Werkzeug ausgebessert werden, **dadurch gekennzeichnet, dass** die Messdaten der vom Sensor aufgenommenen Fehlstellen mit im Speicher abgelegten Messdaten, insbesondere Referenzdaten, abgeglichen werden und aus dem Abgleich die zum Ausbessern erforderliche Materialmenge errechnet und den aufgenommenen Messdaten zugeordnet wird und dass das Ausbessern der Fehlstellen bei laufender Fördereinrichtung erfolgt und das Werkzeug zum Ausbessern einer jeweiligen Fehlstelle gegenüber der bewegten Fehlstelle verlagert wird.

6. Verfahren nach Anspruch 5, **dadurch gekennzeichnet, dass** die Fördergeschwindigkeit der Fördereinrichtung in Abhängigkeit der Anzahl der auszubessernden Fehlstellen und der Anzahl an vorhandenen Werkzeugen im Sinne einer Erzielung einer maximalen Förderleistung eingestellt wird.

7. Verfahren nach einem der Ansprüche 5 oder 6, **dadurch gekennzeichnet, dass** für die aufgenommenen Messdaten in Abhängigkeit der jeweiligen Lage und der errechneten zum Ausbessern der jeweiligen Fehlstelle erforderlichen Materialmenge und dafür erforderlichen Ausbesserungszeit jene Kombination an Bearbeitungsfolge gewählt wird, mit der eine maximale Fördereinrichtungsvorschubsgeschwindigkeit erzielt wird.

8. Verfahren nach einem der Ansprüche 5 bis 7, **dadurch gekennzeichnet, dass** der Sensor die Farbe des die Fehlstelle umgebenden Materials erkennt, der Rechner die Farbe des Füllmaterials errechnet und im Speicher mit den Daten der Fehlstelle abspeichert, wonach der Fehlstelle zum Ausbessern ein Werkzeug mit einer geeigneten Ausbesserungsmaterialfarbe zugewiesen und bei der Berechnung der Vorschubgeschwindigkeit berücksichtigt wird.

## Claims

1. Apparatus for detecting and correcting flaws in wood, having a sensor (1) for detecting and measuring flaws, with a conveyor system (2) for the wood (5) to be inspected and with tools (3) for repairing any flaws which can be displaced in forward movements along at least two, preferably three, axes relative to the conveyor surface (6) by a computer controlled system, the tools being disposed on a bridge spanning the conveyor system transversely to the conveying direction so that they can be displaced transversely to the conveying direction, **characterised in that** at least one guide carrier (8) displaceable on the bridge (4) transversely to the conveying direction (7) co-operates with the bridge (4), along the guide (9) of which, oriented in the conveying direction (7), a tool carriage (10) is displaceable.

2. Apparatus as claimed in claim 1, **characterised in that** at least two guide carriers (8) are provided for each bridge (4).

3. Apparatus as claimed in claim 2, **characterised in that** two transverse guides (11) for guide carriers (8) co-operate with the bridge (4), one transverse guide (11) comprising at least one guide carrier (8) extending out from the bridge (4) opposite the conveying direction (7) and the other transverse guide (11) comprising at least one guide carrier (8) extending out therefrom in the conveying direction (7).

4. Apparatus as claimed in one of claims 1 to 3, **characterised in that** at least two, preferably several, guide carriers, are provided for each transverse guide.

5. Method of operating an apparatus as claimed in one of claims 1 to 4, whereby flaws in pieces of wood lying on a longitudinal conveyor are firstly detected by a sensor, measured and the data temporarily stored, the flaws being repaired by means of a tool disposed downstream of the sensor in the conveying direction, **characterised in that** the measurement data pertaining to the flaws recorded by the sensor is compared with measurement data, in particular reference data, stored in the memory and the quantity of material needed for the repair is calculated from the comparison and assigned to the recorded measurement data, and the flaws are repaired whilst the conveyor system is running and the tool for repairing a respective flaw is displaced relative to the moved flaw.

6. Method as claimed in claim 5, **characterised in that** the conveying speed of the conveyor system is set as a function of the number of flaws to be repaired and the number of available tools with a view to obtaining maximum conveying efficiency.

7. Method as claimed in one of claims 5 or 6, **characterised in that** the combination in terms of processing sequence selected for the recorded measurement data as a function of the respective position and calculated quantity of material necessary to repair the respective flaw and the amount of time needed for the repair is the one whereby a maximum conveyor system feeding speed is obtained.

8. Method as claimed in one of claims 5 to 7, **characterised in that** the sensor detects the colour of the material surrounding the flaw, the computer calculates the colour of the filler material and stores it in the memory with the data pertaining to the flaw, on which basis the flaw is assigned a tool with an appropriate colour of repair material for repairing the flaw and this is taken into account when calculating the feeding speed.

## Revendications

1. Dispositif pour détecter et réparer des défauts dans du bois, comportant un capteur (1) détectant et mesurant les défauts, comportant un dispositif de transport (2) pour le bois (5) à examiner et comportant des outils (3), qui sont utilisés pour réparer les éventuels défauts et qui, commandés par ordinateur, sont mobiles par rapport à la surface de transport (6) avec des vitesses d' avance le long d'au moins deux, de préférence trois axes, lesdits outils étant montés de manière mobile transversalement à la direction de transport sur un portique enjambant le dispositif de transport transversalement à la direction de transport, **caractérisé en ce qu'**au portique (4) est associée au moins une console de guidage (8) qui peut être déplacée transversalement à la direction de transport (7) sur ledit portique (4), un chariot porte-outil (10) pouvant se déplacer le long de la coulisse (9), orientée dans la direction de transport (7), de ladite console de guidage.

2. Dispositif selon la revendication 1, **caractérisé en ce qu'**au moins deux consoles de guidage (8) sont prévues sur chaque portique (4).

3. Dispositif selon la revendication 2, **caractérisé en ce que** deux glissières transversales (11) pour consoles de guidage (8) sont associées au portique (4), une glissière transversale (11) comportant au moins une console de guidage (8) s'avançant en porte-à-faux sur le portique dans le sens opposé à la direction de transport (7) et l'autre glissière transversale (11) comportant au moins une console de guidage (8) s'avançant en porte-à-faux sur le portique (4) dans la direction de transport (7).

4. Dispositif selon l'une quelconque des revendications 1 à 3, **caractérisé en ce que** pour chaque glissière transversale sont prévues au moins deux, de préférence plusieurs consoles de guidage.

5. Procédé de fonctionnement d'un dispositif selon l'une quelconque des revendications 1 à 4, selon lequel les défauts des bois, déposés sur un convoyeur longitudinal, sont d'abord détectés, mesurés par un capteur et les données sont stockées temporairement, à la suite de quoi les défauts sont réparés au moyen d'un outil monté en aval du capteur dans la direction de transport, **caractérisé en ce que** les données de mesure des défauts enregistrés par le capteur sont comparées à des données de mesure stockées en mémoire, en particulier des données de référence, et la quantité de matériau requise pour la réparation est calculée à partir de ladite comparaison et est associée aux données de mesure enregistrées, et **en ce que** la réparation des défauts est effectuée pendant le fonctionnement du dispositif de transport et l'outil utilisé pour la réparation de chaque défaut est déplacé en regard du défaut mobile.

6. Procédé selon la revendication 5, **caractérisé en ce que** la vitesse de transport du dispositif de transport est réglée en fonction du nombre de défauts à réparer et du nombre d'outils présents en vue d'obtenir une capacité de transport maximale.

7. Procédé selon la revendication 5 ou 6, **caractérisé en ce que** la combinaison des opérations successives permettant d'obtenir une vitesse d'avance maximale du dispositif de transport, est choisie, pour les données de mesure enregistrées, en fonction de la position respective et de la quantité de matière calculée, nécessaire pour la réparation du défaut respectif et du temps de réparation requis à cet effet.

8. Procédé selon l'une quelconque des revendications 5 à 7, **caractérisé en ce que** le capteur détecte la couleur du matériau entourant le défaut, le calculateur calcule la couleur du matériau de remplissage et la stocke en mémoire avec les données du défaut, à la suite de quoi un outil avec une couleur de matériau appropriée à la réparation est affecté à la réparation du défaut et il en est tenu compte lors du calcul de la vitesse d' avance.
